Europäisches Patentamt

European Patent Office

Office européen des brevets

(19)

(11) **EP 1 108 293 B1**

(12) **EUROPÄISCHE PATENTSCHRIFT**

(45) Veröffentlichungstag und Bekanntmachung des Hinweises auf die Patenterteilung:
**19.02.2003 Patentblatt 2003/08**

(21) Anmeldenummer: **99953628.7**

(22) Anmeldetag: **27.08.1999**

(51) Int Cl.$^7$: **H04B 1/707**

(86) Internationale Anmeldenummer:
**PCT/DE99/02697**

(87) Internationale Veröffentlichungsnummer:
**WO 00/013333 (09.03.2000 Gazette 2000/10)**

(54) **TRACKING-VERFAHREN UND ANORDNUNG ZUR DURCHFÜHRUNG DES VERFAHRENS**

TRACKING SYSTEM AND ARRANGEMENT FOR IMPLEMENTING SAID METHOD

PROCEDE DE REPERAGE ET DISPOSITIF DE MISE EN OEUVRE DUDIT PROCEDE

(84) Benannte Vertragsstaaten:
**AT BE CH CY DE DK ES FI FR GB GR IE IT LI LU MC NL PT SE**

(30) Priorität: **27.08.1998 DE 19839018**

(43) Veröffentlichungstag der Anmeldung:
**20.06.2001 Patentblatt 2001/25**

(73) Patentinhaber: **Infineon Technologies AG
81669 München (DE)**

(72) Erfinder:
 • **GUNZELMANN, Bertram
 D-86163 Augsburg (DE)**

 • **MOLEV-SHTEIMAN, Arkadi
 58001 Azor (IL)**

(74) Vertreter: **Lange, Thomas, Dr. et al
 Patentanwälte
 Lambsdorff & Lange
 Dingolfinger Strasse 6
 81673 München (DE)**

(56) Entgegenhaltungen:
**WO-A-97/06446          DE-A- 3 743 731
US-A- 5 734 674**

**Beschreibung**

Die Erfindung betrifft ein Verfahren zum Nachführen einer lokal erzeugten Spreizfolge zur Synchronisation mit einer übereinstimmenden empfangenen Spreizfolge, bei welchem diese mit der lokal erzeugten Spreizfolge bezüglich des Synchronisationszeitpunktes zu einem früheren und einem späteren Zeitpunkt in einem Früh-/Spätabstand korrigiert wird, die Korrelationsantworten voneinander subtrahiert werden und der Takt der lokal erzeugten Spreizfolge in Abhängigkeit vom Substraktionsergebnis geregelt wird. Die Erfindung betrifft ferner eine Anordnung zur Durchführung des Verfahrens.

Derartige Verfahren werden auch als Tracking-Verfahren bezeichnet.

Ein grundlegendes Spreizverfahren, auf welches das vorliegende Verfahren angewendet werden kann, ist das Direct-Sequence-Verfahren. Dabei wird eine Nachricht vor der Sendung mit einer höherfrequenteren pseudozufälligen Binärfolge moduliert. Der Empfänger kann aus dem dabei entstehenden Pseudorauschsignal bei Kenntnis der Binärfolge die Nachricht extrahieren.

Diese Verfahren werden in der Datenkommunikation, Ortung und Navigation eingesetzt. Ein wichtiges Einsatzgebiet ist z.B. die Echtzeit-Satelliten-Navigation nach dem System NAVSTAR GPS (Navigation System with Timing And Ranging, Global Positioning System), welches z.B. in Schrödter, GPS-Satelliten-Navigation, Franzis Verlag, München, 1994 beschrieben ist. Damit ein Empfänger einen Sender identifizieren und dessen Informationen auswerten kann, muß er einen senderspezifischen Code (Gold-Code) kennen, der als periodische Signalfolge vorgegebener Länge übertragen wird. Zum Auffinden des Codes werden im Empfänger alle Codes der in Frage kommenden Sender gespeichert. Da ferner die Phasenlage jedes ankommenden Signals nicht bekannt ist, wird in einem Akquisitionsverfahren die Übereinstimmung zwischen der empfangenen Spreizfolge und der lokal erzeugten Spreizfolge festgestellt. Der Vergleich erfolgt über die Korrelationsfunktion des Signals, welches nahezu eins wird, wenn Synchronisation besteht.

Da sich der Sender und der Empfänger relativ zueinander bewegen, muß anschließend die Synchronisation aufrechterhalten werden, indem die Phase der lokal erzeugten Spreizfolge der empfangenen Spreizfolge nachgeführt wird. Dies erfolgt dadurch, daß der Takt der lokal erzeugten Spreizfolge in Abhängigkeit von der ermittelten Phasenabweichung geregelt wird.

Es ist bekannt, zu diesem Zweck eine sogenannte DLL (Delay Locked Loop) einzusetzen, wie sie beispielsweise in aus Holmes: Coherend Spread Spectrum Systems, Robert E. Krieger, 1990, beschrieben ist. Dieses Verfahren beruht darauf, daß die lokal erzeugte Spreizfolge um den gleichen Betrag vor und nach den erwarteten pünktlichen Zeitpunkten phasenverschoben werden und die empfangene Spreizfolge mit den Spreizfolgen dieses früheren und späteren Zeitpunktes korreliert wird. Die Ergebnisse werden dann voneinander subtrahiert, um das endgültige Korrelationsergebnis zu erhalten.

Es zeigt sich dabei, daß eine kleine Phasenverschiebung vorteilhaft für das Regelverhalten im Hinblick auf das Rauschen ist, daß es aber bei einer Vielzahl von Betriebsbedingungen einen Nachteil darstellt, wenn es um eine gute Nachführung der lokal erzeugten Spreizfolge geht. Je kleiner der Früh/Spätabstand der Regelung ist, um so schlechter wird das dynamische Verhalten, weil bei schnellen und plötzlichen Bewegungen die Nachführung verloren gehen kann.

In der U.S.-Patentschrift 5,734,674 von Fenton et al. ist ein Verfahren zur Synchronisation einer lokal erzeugten Spreizfolge mit einer übereinstimmenden empfangenen Spreizfolge beschrieben. Dabei wird anfänglich ein großer Früh-/Spätabstand verwendet, der einen großen Fangbereich abdeckt. Im Verlauf der Regelung wird dieser große Früh-/Spätabstand verengt (vergleiche Spalte 11, Zeilen 46 bis 52, Spalte 13, Zeilen 29 bis 36 sowie Spalte 14, Zeilen 24 bis 36). Das eigentliche Signal-Tracking erfolgt dann mit einem kleinen Früh/Spätabstand. In einem sehr dynamischen Szenario oder bei einem stark verrauschten Ausgangssignal kann die Regelung daher möglicherweise ausrasten.

Der Erfindung liegt daher die **Aufgabe** zugrunde, eine Vorrichtung und ein Verfahren der eingangs genannten Art anzugeben, mit welchem das dynamische Verhalten verbessert und gleichzeitig die Varianz der Streuungen im Ergebnis verbessert wird.

Verfahrensmäßig wird diese Aufgabe dadurch gelöst, daß anhand von mindestens zwei hierarchisch gestaffelter Regelungen mit unterschiedlichen Früh-/Spätabständen Korrelationen durchgeführt werden, und daß der Frühabstand der einen Regelung mit einem kleinen Früh-/Spätabstand nicht früher als der Frühabstand der anderen Regelung mit einem nächstgrößeren Früh/Spätabstand werden darf und außerdem die Spätabstände der einen Regelung mit einem kleinen Früh-/Spätabstand nicht später als der Spätabstand der anderen Regelung mit einem nächstgrößeren Früh-/Spätabstand werden dürfen.

Bei einer DLL-Anordnung zur Durchführung dieses Verfahrens wird die Aufgabe dadurch gelöst, daß mindestens zwei Regelkreise mit unterschiedlichen Früh-/Spätabständen eingangsseitig parallel geschaltet sind, daß der Ausgang eines Regelkreises mit einem kleineren Früh-/Spätabstand und der Ausgang des Regelkreises mit dem jeweils nächstgrößeren Früh-/Spätabstand mit einem Vergleicher verbunden sind, der die Ausgangssignale dieser beiden Regelkreise vergleicht, und daß alle Vergleiche mit einer Datenverarbeitungseinheit verbunden sind, welche aus den Ausgangssignalen aller Regelkreise sicherstellt, daß die zugehörigen Grenzwerte der Früh-/Spätabstände nicht überschritten werden.

Ein Grundgedanke der Erfindung besteht demnach darin, mehrere DLL-Anordnungen in einer hierarchischen Struktur zusammenwirken zu lassen. Die einzelnen Regelungen weisen Phasenverschiebungen in der Weise auf, daß sie ineinander geschachtelt sind und zunächst die Regelung mit dem größten Früh-/Spätabstand angesprochen wird. Beim Übergang zur DLL mit dem nächstkleineren Früh-/Spätabstand darf die Regelung nur innerhalb der Grenzwerte der DLL mit dem nächstgrößeren Früh/Spätabstand liegen usw. Anschaulich ausgedrückt kann man das Verfahren mit ineinandergeschachtelten Wagen vergleichen, wobei sich jeweils ein kleinerer Wagen auf dem größeren Wagen bewegen kann. Der kleinste Wagen vollführt dabei einerseits eine Eigenbewegung und andererseits macht er auch die Bewegungen der anderen Wagen mit, wenn er an die Grenze seines eigenen Bewegungsbereiches gelangt.

Die Erfindung hat den Vorteil, daß zwei grundsätzlich unvereinbare Bedingungen erfüllt werden können, nämlich eine gute Rauschunterdrückung einerseits und ein gutes dynamisches Verhalten andererseits.

Es ist besonders vorteilhaft, daß vier Regelkreise vorhanden sind. Es kann damit eine besonders gute Unterdrückung der Streuungsvarianz erreicht werden.

Weitere vorteilhafte Weiterbildungen der Erfindung sind in den abhängigen Ansprüchen beschrieben.

Nachfolgend wird die Erfindung anhand eines in der Zeichnung dargestellten Ausführungsbeispieles weiter beschrieben. Es zeigen:

Figur 1 ein Blockschaltbild eines herkömmlichen Regelkreises (DLL);

Figur 2 ein Blockschaltbild mit hierarchisch gestaffelten Regelkreisen gemäß der Erfindung;

Figur 3 ein Blockschaltbild eines Regelkreises gemäß Figur 2;

Figur 4 ein Blockschaltbild der erfindungsgemäßen Regelungs-Anordnung; und

Figur 5a und Figur 5b jeweils ein Beispiel für ein Korrelationsergebnis als Ausgangssignale der Regelungen gemäß Figur 2.

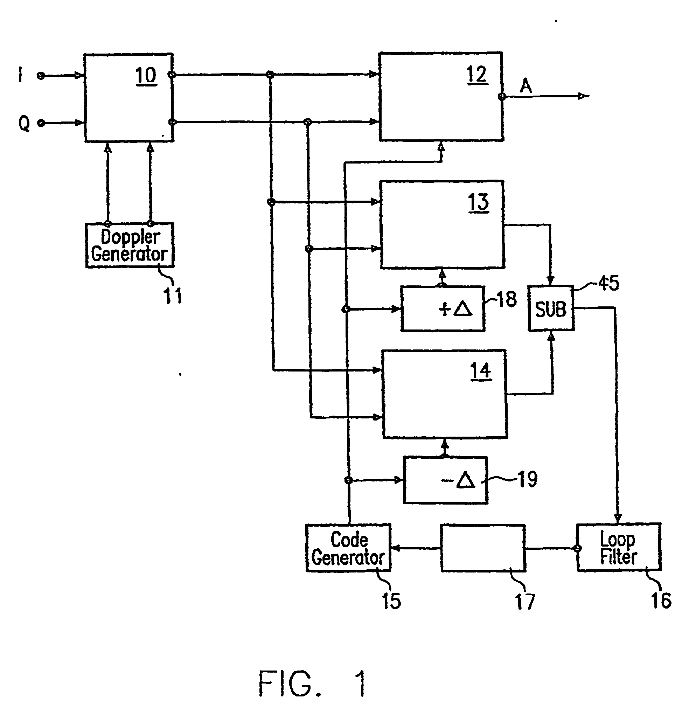

Gemäß Figur 1 wird das von einer Antenne als Spreizfolge kommende empfangene Gesamtsignal mit Hilfe eines Quadraturdemodulators ins Basisband gemischt, wobei das Signal noch um die Doppler-Frequenz verschoben ist (nicht dargestellt).

Die Signale werden einem Phasenschieber 10 zugeführt, der von einem Doppler-Generator 11 beaufschlagt ist. Der Phasenschieber 10 beseitigt die durch die Doppler-Frequenz verursachte Verschiebung des Empfängersignals. Die Ausgänge des Phasenschiebers 10 gelangen parallel an drei Korrelatoren 12, 13 und 14, in welchen auf bekannte Weise jeweils der Gold-Code des betreffenden Senders aus dem Rauschpegel des Gesamtsignals herausgefunden wird. Ein Code-Generator 15 versorgt zu diesem Zweck alle drei Korrelatoren 12, 13 und 14 mit den bei der Suche in Frage kommenden Gold-Codes.

Der Takt des Code-Generators 15 wird über einen numerisch gesteuerten Oszillator (NCO) 17 vom Ausgang eines Loop-Filters 16 bestimmt.

Dem ersten Korrelator 12 wird die vom Code-Generator 15 erzeugte Spreizfolge zeitgleich zugeführt, d. h. er arbeitet bezüglich der lokal erzeugten Spreizfolge synchron und korreliert damit die empfangene Spreizfolge mit einer lokal erzeugten "pünktlichen" Spreizfolge. An seinem Ausgang A ist das Korrelationsergebnis der synchronisierten Spreizfolgen abgreifbar.

Im zweiten und dritten Korrelator 13, 14 wird die empfangene Spreizfolge mit zwei phasenverschobenen lokal erzeugten Spreizfolgen korreliert, indem der Ausgang des Code-Generators 15 dem zweiten Korrelator 13 über einen ersten Phasenschieber 18 mit voreilender Phase $+\Delta$ zugeführt wird. Der dritte Korrelator 14 enthält über einen zweiten Phasenschieber 19 mit der Phasenverschiebung $-\Delta$ die nacheilende lokal erzeugte Spreizfolge. Der Betrag dieses Früh-/Spätstandes $2\Delta$ bezüglich des Synchronisationszeitpunktes beträgt typischerweise eine Chipbreite Tc.

Die Korrelationsantworten des zweiten und dritten Korrelators 13, 14 werden in einem Subtrahierer 45 subtrahiert, dessen Ausgang dem Loop-Filter 16 zugeführt wird.

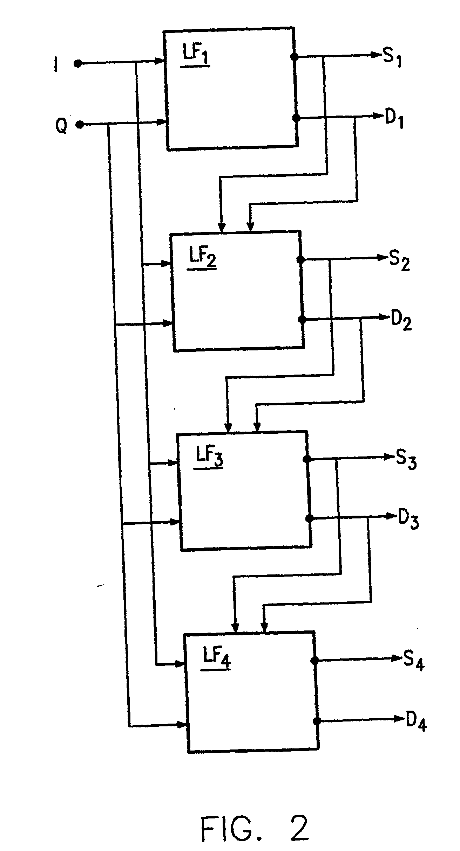

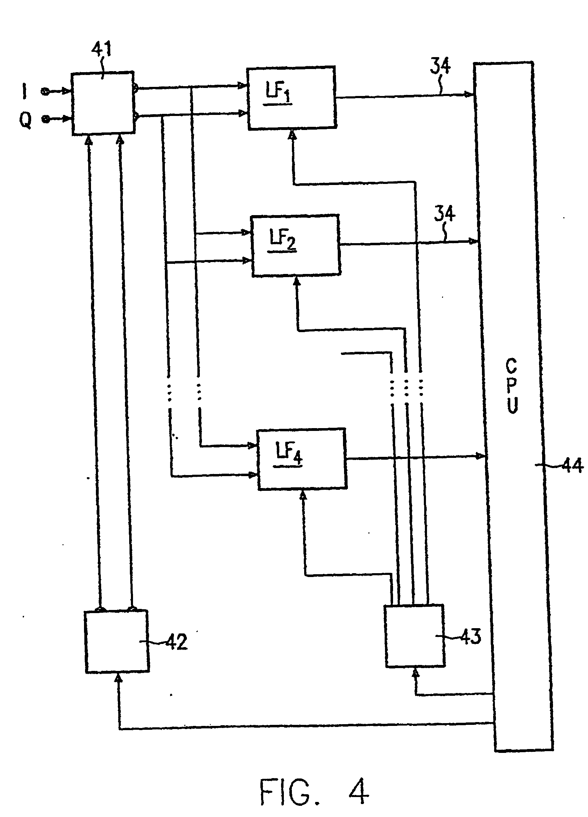

Bei dem erfindungsgemäßen Verfahren werden bei dem in Figur 2 dargestellten Beispiel vier hierarchisch gestaffelte Regelungen aus $LF_1$, $LF_2$, $LF_3$, $LF_4$ verwendet, die jeweils ein Loop-Filter zweiter Ordnung aufweisen. Die quadraturdemodulierte Spreizfolge Q und die Inphase Spreizfolge I werden jeder Regelung $LF_1$ bis $LF_4$ eingangsseitig parallel zugeführt. Für jede Regelung $LF_1$ bis $LF_4$ sind unterschiedliche Früh-/Spätabstände eingestellt. Eine wichtige Voraussetzung, die eingehalten werden muß, ist daß der Früh-/Spätabstand $2\Delta_K$ einer Regelung $LF_K$ im Vergleich zu einer Regelung $LF_{K-1}$ mit dem nächstgrößeren Früh-/Spätabstand $2\Delta_{K-1}$ folgende Bedingungen erfüllt: $\Delta_K \geq \Delta_{K-1}/2$. Die voreilenden bzw. nacheilenden Phasenverschiebungen der einzelnen Regelkreise $LF_1$, $LF_2$, $LF_3$ und $LF_4$ betragen $\pm\Delta_1 = Tc/2$, $\Delta_2 = Tc/4$, $\pm\Delta_3 = Tc/8$ und $\pm\Delta_4 = Tc/16$.

Da Filter zweiter Ordnung verwendet sind, weist jeder Regelkreis $LF_1$ bis $LF_4$ ein Signal-Ausgangspaar $S_1$, $D_1$ bis $S_4$, $D_4$ auf, an welchen die Verzögerung (D) und die Geschwindigkeit (S) abgreifbar sind.

Der Regelkreis $LF_1$ mit dem größten Früh-/Spätabstand arbeitet unabhängig. Seine Ausgänge sind eingangsseitig mit dem Regelkreis $LF_2$ mit dem nächstkleineren Früh-/Spätabstand verbunden, wo die Größen der beiden Regelkreise miteinander verglichen werden. In gleicher Weise sind die Ausgänge des zweiten Regelkreises $LF_2$ eingangsseitig mit dem Regelkreis $LF_3$ mit dem nächstkleineren Früh-/Spätabstand verbunden usw.

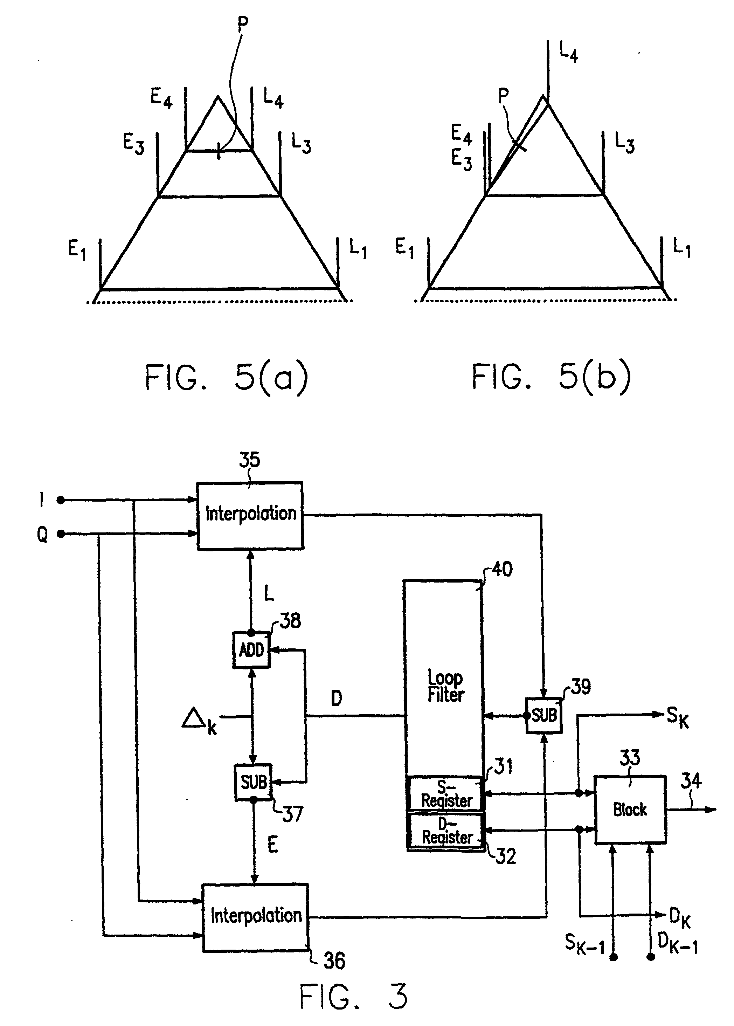

Wie Fig. 3 veranschaulicht, werden in jedem Regelkreis $LF_1$ bis $LF_4$ die in diesem Regelkreis erzeugten Ausganssignale, die in einem S-Register 31 und einem D-Register 32 zwischengespeichert werden, mit den Ausganssignalen verglichen, welche aus der Anordnung gemäß Fig. 2 zugeführt werden. Der Vergleich erfolgt in einem Vergleicher 33, der ausgangsseitig über eine Leitung 34 mit einer Datenverarbeitungseinheit 40 (siehe Fig. 4) verbunden ist.

Als weitere Bestandteile der Regelkreise $LF_1$ bis $LF_4$ veranschaulicht Fig. 3 zwei Interpolationseinheiten 35, 36, an welchen die Eingangssignale I, Q anliegen, und welche in Abhängigkeit von der Abtastrate erforderlich sind, um die Auflösung gegebenenfalls zu erhöhen. Die Interpolationseinheiten 35, 36 werden mit dem gewünschten Früh- bzw. Spätabstand über einen Subtrahierer 37 bzw. einen Addierer 38 beaufschlagt, welcher mit der gewünschten Phasenverschiebung (im vorliegenden Beispiel $\Delta_K$) eingestellt wird. Der Regelkreis wird vervollständigt durch einen Subtrahierer 39 zur Subtraktion der Ausgangssignale der beiden Interpolationseinheiten 35, 36 und zur Beaufschlagung eines Loop-Filters 40 zweiter Ordnung, welches einerseits den Subtrahierer 37 und den Addierer 38 beaufschlagt und andererseits die Inhalte des S-Registers 31 und des D-Registers 32 festlegt.

Ein Blockschaltbild der gesamten hierarchisch gestaffelten Regelung zeigt Fig. 4 mit einem eingangsseitigen Phasenschieber 41, einem von der Datenverarbeitungseinheit 44 gesteuerten Doppler-Generator 42, einem Gold-Codegenerator 43 sowie den vier Regelkreisen $LF_1$ bis $LF_4$.

Anhand der Fig. 5a wird nachfolgend die Funktion dieser hierarchisch gestaffelten Regelanordnung an einem typischen Beispiel erläutert, bei welchem "normale" Bedingungen zugrundegelegt werden. Fig. 5a veranschaulicht die Korrelationsantwort der gesamten Anordnung, die sich idealerweise als Dreieckskurve darstellt. Es sind dabei die Früh-/Spätabstände $E_1$, $L_1$; $E_2$, $L_2$... $E_4$, $L_4$ der vier Regelkreise $LF_1$ bis $LF_4$ wiedergegeben. Zur Auswertung des pünktlichen Zeitpunktes wird der Regelkreis $L_4$ mit dem kleinsten Früh-/Spätabstand verwendet.

Im Beispiel gemäß Fig. 5 (b) kann in einem sehr dynamischen Szenario oder bei einem stark verrauschten Eingangssignal die Regelung $LF_4$ mit dem kleinsten Früh-/Spätabstand möglicherweise ausrasten.

Bevor dies passieren kann, wird die Regelung $LF_4$ mit dem kleinsten-Früh-/Spätabstand durch die Grenzen der Regelung $LF_3$ mit dem nächstgrößeren Früh-/Spätabstand begrenzt usw. Aufgrund ihrer Begrenzung wird die Regelung $LF_4$ mit dem kleinsten Früh-/Spätabstand als maßgebliche Regelung zur Berechnung des pünktlichen Zeitpunkts verwendet. In Fig. 5(a) und Fig. 5(b) sind der pünktliche Zeitpunkt, der in der Mitte zwischen $E_4$ und $L_4$ liegt, mit P bezeichnet.

**Patentansprüche**

1. Verfahren zum Nachführen einer lokal erzeugten Spreizfolge zur Synchronisation mit einer übereinstimmenden empfangenen Spreizfolge, bei welchem diese mit der lokal erzeugten Spreizfolge bezüglich des Synchronisationszeitpunktes zu einem früheren und einem späteren Zeitpunkt in einem Früh/Spätabstand korrigiert wird, die Korrelationsantworten voneinander subtrahiert werden und der Takt der lokal erzeugten Spreizfolge in Abhängigkeit vom Subtraktionsergebnis geregelt wird, **dadurch gekennzeichnet,**
   **daß** anhand von mindestens zwei hierarchisch gestaffelter Regelungen mit unterschiedlichen Früh-/Spätabständen Korrelationen durchgeführt werden und daß der Frühabstand der einen Regelung mit einem kleinen Früh-/Spätabstand nicht früher als der Frühabstand der anderen Regelung mit einem nächstgrößeren Früh-/Spätabstand werden darf und außerdem die Spätabstände der einen Regelung mit einem kleinen Früh-/Spätabstand nicht später als der Spätabstand der anderen Regelung mit einem nächstgrößeren Früh-/Spätabstand werden dürfen.

2. Verfahren nach Anspruch 1 **dadurch gekennzeichnet,**
   **daß** beginnend mit dem größten Früh-/Spätabstand bei Erreichen der zugehörigen Regelgrenze anschließend mit kleinerem Früh/Spätabstand Korrelationen durchgeführt werden.

3. Verfahren nach Anspruch 1 oder 2, **dadurch gekennzeichnet,**
   **daß** der frühe Zeitpunkt ($E_4$) und der späte Zeitpunkt ($L_4$) der Regelung ($LF_4$) mit den kleinsten Früh-/Spätabstand zur Berechnung des pünktlichen Zeitpunkts (P) verwendet werden.

4. Anordnung zur Durchführung des Verfahrens nach Anspruch 1, bei welcher in einer DLL-Anordnung lokal erzeugte frühe, pünktliche und späte Spreizfolgen mit der empfangenen Spreizfolge verglichen werden, wobei die Anordnung Filter (18, 19) umfaßt, welche die frühere und spätere Spreizfolge jeweils mit einer Phasenverschiebung ($\pm\Delta_K$) bezüglich der pünktlichen Spreizfolge beaufschlagen, **dadurch gekennzeichnet,**

   - **daß** mindestens zwei Regelkreise ($LF_K$, $LF_{K-1}$...) mit unterschiedlichen Früh-/Spätabständen eingangsseitig parallelgeschaltet werden,

- **daß** der Ausgang eines Regelkreises ($LF_K$) mit einem kleineren Früh-/Spätabstand ($\pm\Delta_K$) und der Ausgang des Regelkreises mit dem jeweils nächst größeren Früh-/Spätabstand ($\pm\Delta_{k-1}$) mit einem Vergleicher (33) verbunden sind, der die Ausgangssignale beider Regelkreise vergleicht, und daß alle Vergleicher (33) mit einer Datenverarbeitungseinheit (40) verbunden sind.

5. Anordnung nach Anspruch 4, **dadurch gekennzeichnet,** **daß** sie vier Regelkreise aufweist.

6. Anordnung nach Anspruch 4 oder 5, **dadurch gekennzeichnet,** **daß** die Regelkreise als Regelkreise 2. Ordnung ausgebildet sind.

7. Anordnung nach einem der Ansprüche 4 bis 6, **dadurch gekennzeichnet,** **daß** der Früh-/ Spätabstand $2\Delta_K$ einer Regelung ($LF_K$) im Vergleich zu einer Regelung ($LF_{K-1}$) mit dem nächstgrößeren Früh/Spätabstand $2\Delta_{K-1}$ folgende Bedingung erfüllt:

$$\Delta_K \geq \Delta_{K-1}/2.$$

8. Anordnung nach einem der Ansprüche 4 bis 7, **dadurch gekennzeichnet,** **daß** der größte Früh-/Spätabstand $2\Delta_1 = T_C$ ist, wobei $T_C$ die Chipbreite der Spreizfolge bezeichnet.

**Claims**

1. Method for correcting a locally generated spread spectrum signal sequence for synchronization with a corresponding received spread spectrum signal sequence, in which method the latter is corrected with the locally generated spread spectrum signal sequence with respect to the synchronization time at an earlier and a later time in an early/late interval, the correlation responses are subtracted from one another and the clock of the locally generated spread spectrum signal sequence is controlled as a function of the result of the subtraction, **characterized in that** correlations are performed by means of at least two hierarchically graduated closed-loop controls with different early/late intervals and **in that** the early interval of one closed-loop control having a small early/late interval must not become earlier than the early interval of the other closed-loop control having a next-larger early/late interval and, furthermore, the late intervals of the one closed-loop control having a small early/late interval must not become later than the late interval of the other closed-loop control having a next-larger early/late interval.

2. Method according to Claim 1, **characterized in that** when the associated control limit is reached, correlations are then performed with a smaller early/late interval, beginning with the largest early/late interval.

3. Method according to Claim 1 or 2, **characterized in that** the early time ($E_4$) and the late time ($L_4$) of the closed-loop control ($LF_4$) having the smallest early/late interval are used for calculating the punctual time (P).

4. Arrangement for performing the method according to Claim 1, in which locally generated early, punctual and late spread spectrum signal sequences are compared with the received spread spectrum signal sequence in a DLL arrangement, the arrangement comprising filters (18, 19) which in each case apply a phase shift ($\pm\Delta_k$) with respect to the punctual spread spectrum signal sequence to the earlier and later spread spectrum signal sequence, **characterized in that**

- at least two control loops ($LF_k$, $LF_{k-1}$...) having different early/late intervals are connected in parallel at the inputs,
- the output of a control loop ($LF_k$) having a smaller early/late interval ($\pm\Delta_k$) and the output of the control loop having the in each case next-larger early/late interval ($\pm\Delta_{k-1}$) are connected to a comparator (33) which compares the output signals of the two control loops, and **in that** all comparators (33) are connected to a data methoding unit (40).

5. Arrangement according to claim 4, **characterized in that** it exhibits four control loops.

6. Arrangement according to claim 4 or 5, **characterized in that** the control loops are constructed as second-order control loops.

7. Arrangement according to one of Claims 4 to 6, **characterized in that** the early/late interval $2\Delta_k$ of a closed-loop control ($LF_k$), in comparison with a closed-loop control ($LF_{k-1}$) having the next-larger early/late interval $2\Delta_{k-1}$, meets the following condition:

$$\Delta_k \geq \Delta_{k-1}/2.$$

8. Arrangement according to one of claims 4 to 7, **characterized in that** the largest early/late interval

is $2\Delta_1 = T_c$, where $T_c$ is the chip period of the spread spectrum signal sequence.

**Revendications**

1. Procédé pour la poursuite d'une séquence d'étalement produite localement en vue de la synchronisation avec une séquence d'étalement reçue coïncidente, dans lequel on corrige celle-ci avec la séquence d'étalement produite localement par rapport à l'instant de synchronisation à un instant en avance et à un instant en retard dans un intervalle avance/retard, on soustrait les réponses de corrélation l'une de l'autre et on règle l'horloge de la séquence d'étalement produite localement en fonction du résultat de soustraction,
   **caractérisé par le fait qu'**on effectue des corrélations à l'aide d'au moins deux régulations échelonnées hiérarchiquement ayant des intervalles avance/retard différents, que l'intervalle d'avance d'une régulation ayant un petit intervalle avance/retard ne doit pas devenir plus précoce que l'intervalle d'avance de l'autre régulation ayant un intervalle avance/retard juste supérieur et que, en outre, les intervalles de retard d'une régulation ayant un petit intervalle avance/retard ne doivent pas devenir plus retardés que l'intervalle de retard de l'autre régulation ayant un intervalle avance/retard juste supérieur.

2. Procédé selon la revendication 1,
   **caractérisé par le fait que**, après avoir commencé avec le plus grand intervalle avance/retard, on effectue ensuite, lorsqu'on atteint les limites de régulation associées, des corrélations avec un intervalle avance/retard inférieur.

3. Procédé selon la revendication 1 ou 2,
   **caractérisé par le fait qu'**on utilise l'instant en avance ($E_4$) et l'instant en retard ($L_4$) de la régulation ($LF_4$) ayant le plus petit intervalle avance/retard pour le calcul de l'instant ponctuel (P).

4. Dispositif pour la mise en oeuvre du procédé selon la revendication 1, dans lequel, dans un dispositif DLL, des séquences d'étalement produites localement, en avance, ponctuelles et en retard, sont comparées à la séquence d'étalement reçue, le dispositif comprenant des filtres (18, 19) qui appliquent à la séquence d'étalement en avance et en retard à chaque fois un déphasage ($\pm \Delta_K$) par rapport à la séquence d'étalement ponctuelle,
   **caractérisé par le fait que**

   - au moins deux circuits de régulation ($LF_K$, $LF_{K-1}$, ...) ayant des intervalles avance/retard différents sont branchés en parallèle côté entrée,

   - la sortie d'un circuit de régulation ($LF_K$) ayant un petit intervalle avance/retard ($\pm \Delta_K$) et la sortie du circuit de régulation ayant l'intervalle avance/retard respectivement juste supérieur ($\pm \Delta_{K-1}$) sont reliées à un comparateur (33) qui compare les signaux de sortie des deux circuits de régulation, et tous les comparateurs (33) sont reliés à une unité de traitement de données (40).

5. Dispositif selon la revendication 4,
   **caractérisé par le fait qu'**il comporte quatre circuits de régulation.

6. Dispositif selon la revendication 4 ou 5,
   **caractérisé par le fait que** les circuits de régulation sont conçus comme des circuits de régulation d'ordre 2.

7. Dispositif selon l'une des revendications 4 à 6,
   **caractérisé par le fait que** l'intervalle avance/retard $2\Delta_K$ d'une régulation ($LF_K$) en comparaison d'une régulation ($LF_{K-1}$) ayant l'intervalle avance/retard juste supérieur $2\Delta_{K-1}$ vérifie la condition suivante :

$$\Delta_K \geq \Delta_{K-1}/2$$

8. Dispositif selon l'une des revendications 4 à 7,
   **caractérisé par le fait que** le plus grand intervalle avance/retard est $2\Delta_1 = T_c$, $T_c$ étant la largeur de segment chip de la séquence d'étalement.

FIG. 1

FIG. 2

FIG. 4

FIG. 5(a)  FIG. 5(b)

FIG. 3